# EUROPEAN PATENT SPECIFICATION

(11) **EP 3 284 961 B1**
(45) Date of publication and mention of the grant of the patent: **06.05.2020**
(21) Application number: 17180225.9
(22) Date of filing: 07.07.2017
(51) Int. Cl.: F16B 37/08, E03C 1/04

(54) **SANITARY FITTING**
WASCHARMATUR
ROBINETTERIE SANITAIRE

(30) Priority: 16.08.2016 DE 102016115181
(43) Date of publication of application: 21.02.2018
(73) Proprietor: ORAS OY, 26100 Rauma (FI)
(72) Inventor: Icking, Thomas, 26510 Rauma (FI)
(74) Representative: Ostertag & Partner Patentanwälte mbB

(56) References cited:
- DE-A1- 19 628 780
- DE-A1- 19 958 627
- DE-A1-102015 001 562
- DE-U1-202013 102 565
- JP-A- 2000 097 219

## Description

### BACKGROUND OF THE INVENTION

### 1. Field of the Invention

The invention relates to a sanitary fitting which may be used in a bathroom or a kitchen for a controlled release of water. The invention also relates to a securing nut adapted to be screwed onto a male screw thread of a fastening rod of a sanitary fitting as well as to a combination of a retaining element for a fastening rod of a sanitary fitting and a securing nut.

### 2. Description of the Prior Art

A sanitary fitting usually comprises a mounting stud bolt with a male screw thread arranged on a lower side of the sanitary fitting for mounting purposes. On the lower side of the sanitary fitting usually one or two water connection conduits extend from the sanitary fitting together with the mounting stud bolt. The water connection conduits and the mounting stud bolt are fed through a hole in the sanitary installation, thus disappearing from the visible surface of the sanitary installation. The sanitary fitting may be attached, for example, to a washbasin, a washstand, a table or the like.

At the position on the surface where the sanitary fitting is intended to be attached to a mounting hole or a mounting feedthrough are provided. The mounting stud bolt is fed through the mounting hole together with the water supply conduits. At the other side of the mounting hole, a retaining element is slid on the mounting stud bolt and secured by a nut. The retaining element may be designed as a retaining plate, e.g. horseshoe-shaped and may extend in a direction perpendicular to a main screw axis of the mounting stud bolt, parallel to the mounting area the sanitary fitting is to be mounted to.

The nut is screwed onto the mounting stud bolt, pushing the mounting plate towards the lower end of the sanitary fitting and in the direction of the mounting hole.

The mounting stud bolt usually is longer than needed in most installation cases in order to cover all possible mounting situations with one mounting stud length. Thus, in the regular case the mounting bolt being fed through a thin tabletop is much longer than needed and nut and mounting plate have a long way until the mounting plate reaches the lower surface of the tabletop. Accordingly, the nut has to be screwed in a time-consuming and cumbersome process including a high number of revolutions until the sanitary fitting is finally mounted. Above all, the installation situation usually forces the person doing the installation into an extremely uncomfortable position, e.g. below a table.

Documents DE 10 2015 001 562 A1 and DE 196 28 780 A1 describe bolt-nut arrangements for mounting a sanitary fitting.

### SUMMARY OF THE INVENTION

It is an object of the present invention to provide a sanitary fitting allowing for a fast and simple mounting process. In particular, it is an object to substantially reduce the number of revolutions a securing nut has to perform until the necessary tightening torque is reached.

This object is achieved by a sanitary fitting of claim 1. Further embodiments are defined in the depending claims.

The sanitary fitting according to the invention comprises a fastening device for fastening the sanitary fitting to a mounting through-hole of a sanitary installation, the fastening device comprising a fastening rod connected to the sanitary fitting. Exemplary embodiments of the fastening rod may be a bolt, a screw or the like.

The fastening rod comprises at least partially a male screw thread defining a main screw axis. The male screw thread may cover the complete fastening rod or may be provided only at a certain section along the main screw axis.

The fastening device further comprises a retaining element to be arranged on a side of the through-hole of the sanitary installation opposite to the sanitary fitting, the retaining element having a top end face, a bottom end face, and a hole extending from the top end face to the bottom end face and through which the fastening rod may be passed. The hole may be, for example, a bore and may have, for example, a cylindrical shape.

Further, the fastening device comprises a securing nut being adapted to be screwed onto the male screw thread of the fastening rod, the securing nut having a bottom end face, a top end face, and a hole extending from the bottom end face to the top end face.

The hole comprises a screw thread passage and a sliding passage.

The screw thread passage has an inner surface with a screw portion having at least a partial female screw thread and is adapted to engage with the male screw thread of the fastening device.

The sliding passage is adapted to receive the fastening rod and is adapted to allow a sliding movement of the fastening rod without the male screw thread of the fastening rod engaging the female screw thread of the securing nut.

The screw thread passage and the sliding passage are connected such that the securing nut and the fastening rod may be displaced relative to each perpendicularly to the main screw axis of the fastening rod between a securing position, in which the fastening rod is positioned in the screw passage and a sliding position, in which the fastening rod is positioned in the sliding passage.

The screw thread passage and the sliding passage may have, for example, a cylindrical shape. Due to the connection between the screw thread passage and the sliding passage the cylindrical outer surfaces of both passages may penetrate each other.

It is a basic idea of the invention to provide a pair of longitudinal bores or passages in the securing nut, wherein the passages are interconnected with each other. Accordingly, when the sanitary fitting is held in place, i.e. the mounting bolts and the water connection conduits are fed through the mounting hole, the retaining element and subsequently the securing nut may be slid on the fastening rod. In this situation, the sliding passage of the securing nut receives the fastening rod and both the retaining element and the securing nut may be slid onto the initial fastening position. Then, the securing nut may be shifted perpendicularly to the main screw axis of the fastening rod such that the fastening rod, in particular the male screw thread thereof, is positioned in the screw thread passage and engages with the female screw thread thereof. In this constellation, the securing nut may be screwed along the fastening rod and allows to fasten the retaining element against the lower end of the sanitary fitting.

On the other hand, for releasing the retaining element, the securing nut has to be turned a few revolutions, typically a single revolution, to reduce the force exerted by the securing nut onto the retaining element. Then, the securing nut may be shifted such that the fastening rod engages with the sliding passage of the securing nut and the retaining element and the securing nut may be slid along the fastening rod and may be removed.

In one embodiment of the sanitary fitting the screw portion extends in the screw thread passage at least partially along the main screw axis and partially along a circumferential direction regarding the main screw axis. Preferably, the extension of the screw portion along the main screw axis is complete as in regular nuts.

The extension of the screw portion along the circumferential direction is preferably equal to or smaller than 50% of the total inner circumference of the screw thread passage. Thus, it is easily possible to shift the securing nut perpendicular to the main screw axis to either receive the fastening rod in the screw thread passage or the sliding passage.

The top end face of the securing nut and/or the bottom end face of the retaining element comprises a centering surface for aligning the screw thread passage with the fastening rod. Accordingly, when a force is exerted by the top end face of the securing nut onto the retaining element and/or by the bottom end face of the retaining element onto the securing nut, the centering surface redirects the exerted force in a way that the fastening rod is forced to be received by the screw thread passage of the securing nut.

The centering surface comprises a frustoconically shaped surface portion.

The screw thread passage comprises a screw thread passage center, the sliding passage comprises a sliding passage center, and the centering surface comprises a third center, the centering center. In a regular nut, the screw thread passage center and, if present, the centering center coincide. According to the present invention, at least the screw thread passage center and the sliding passage center are displaced relatively to each other, i.e. are eccentric. The eccentricity equals or is greater than half of the difference between the major diameter and the minor diameter of the screw thread. In the case of cylindrically shaped passages or a cone shaped centering surface, the center may be the geometrical symmetry center.

According to one embodiment the centering center and the screw thread passage center coincide.

According to a preferred alternative embodiment the centering center is displaced relatively to the screw thread passage center in a direction away from the sliding passage center. This additional eccentricity between the centering center and the screw thread passage center increases the force exerted between the male screw thread of the fastening rod and the female screw thread of the screw thread passage and substantially improves the locking function of the securing nut.

According to a preferred embodiment the shape of the bottom end face of the retaining element matches the shape of the top end face of the securing nut. The term "matching" shall imply every appropriate cooperation between both end faces, but may in particular imply mutually inversely shaped surfaces.

According to a preferred embodiment the bottom end face of the retaining element comprises a frustroconically shaped surface portion. In particular, the frustroconically shaped surface portion may additionally be concave. Thus, the top end face of the securing nut, pressing against the bottom end face of the retaining element, would be centered on the main screw axis and the fastening rod would be received in the screw thread passage of the securing nut.

Alternatively or additionally, the top end face of the securing nut comprises a frustroconically shaped surface portion, which may in particular be concave. With regards to the securing nut, the centering axis of the frustroconically shaped surface portion may be displaced with regards to the main screw axis of the fastening rod, away from the sliding passage center, as already mentioned above.

In an embodiment, the axis of the cone of the frustroconically shaped surface portion of the retaining elements and/or of the securing nut coincides with the main screw axis of the screw thread passage of the securing thread or - in the case of the securing nut - is shifted from the main screw axis/the screw thread passage center in a direction away from the sliding passage.

In a preferred embodiment the retaining element comprises a connection means to connect the retaining element with the securing nut.

Preferably, the connection means arranges the securing nut relatively to the fastening rod such that the fastening rod is received in the sliding passage. The connection means may interact with an outer groove, preferably a circumferential groove, on the outer surface of the securing nut.

In a preferred embodiment, the outer groove is centered to the sliding passage center. Thus, the securing nut may be slid along the main screw axis of the fastening rod on the fastening rod together with the retaining element without interaction between the male screw thread of the fastening rod and the female screw thread of the screw thread passage of the securing nut.

The object is also achieved by a securing nut of claim 11, the securing nut being adapted to be screwed onto a male screw thread of a fastening rod of a sanitary fitting, the securing nut comprising a nut body having a bottom end face and a top end face, and a hole extending from the bottom end face to the top end face, the hole comprising a screw thread passage and a sliding passage, wherein the screw thread passage has an inner surface with a screw portion having at least a partial female screw thread and is adapted to engage with a male screw thread of a fastening rod, wherein the sliding passage is adapted to receive a fastening rod and to allow a sliding movement of the fastening rod without the male screw thread of the fastening rod engaging the female screw thread of the securing nut, and wherein the screw thread passage and the sliding passage are connected with each other such that the securing nut and a fastening rod may be displaced relatively to each other between the fastening rod being received in the securing position in the screw passage and the fastening rod being received in a sliding position in the sliding passage.

The above described securing nut may be used on a conventional sanitary fitting to achieve the above-mentioned advantages.

The object of the invention is also achieved by a combination of a retaining element to be arranged on a fastening rod of a sanitary fitting and a securing nut as mentioned above, the retaining element having a top end face, bottom end face, and a hole extending from the top end face to the bottom end face through which the fastening rod may be passed, wherein the retaining element comprises a connection means to connect the retaining element with the securing nut.

In particular, the connection means is adapted to arrange the securing nut relatively to the fastening rod such that the fastening rod is received in the sliding passage of the securing nut.

### BRIEF DESCRIPTION OF THE DRAWINGS

Various features and advantages of the invention may be more readily understood with reference to the following detailed description taken in conjunction with the accompanying drawings in which:
- Figure 1: shows a perspective view of a first embodiment of a securing nut according to the invention;
- Figure 2: shows a side view of the first embodiment of the securing nut of figure 1;
- Figure 3: shows a sectional view of the first embodiment of the securing nut along the line III-III';
- Figure 4: shows an bottom view of the first embodiment of the securing nut;
- Figure 5: shows a top view of the first embodiment of the securing nut;
- Figure 6: the first embodiment of the securing nut of figures 1-5 and an embodiment of a retaining element on a fastening rod of a sanitary fitting;
- Figure 7A: shows a sectional view of the arrangement of figure 6;
- Figure 7B: shows an enlargement of the encircled area of figure 7A;
- Figure 7C: shows the enlargement of the encircled area of figure 7B with the first embodiment of the securing nut in a different position;
- Figure 8: shows a perspective view of a second embodiment of a securing nut according to the intervention;
- Figure 9: shows a side view of the second embodiment of the securing nut of figure 1;
- Figure 10: shows sectional view of the second embodiment of the securing nut along the line X-X';
- Figure 11: shows an bottom view of the second embodiment of the securing nut;
- Figure 12: shows a top view of the second embodiment of the securing nut.

### DETAILED DESCRIPTION OF PREFERRED EMBODIMENTS

Embodiments illustrating the present invention will be described in detail as follows. In need to embodiment, the same reference number is used to refer to a given feature that is found in one or more of the embodiments.

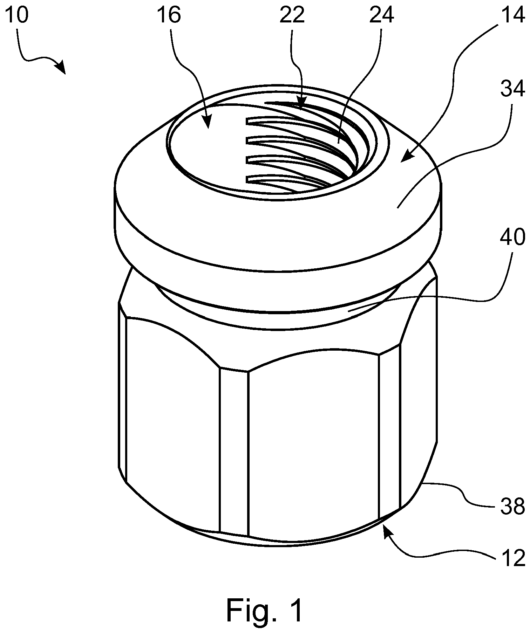

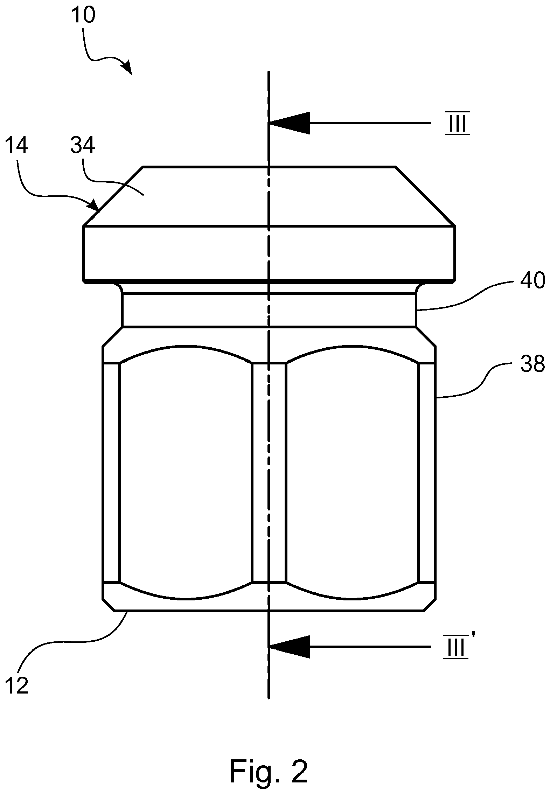

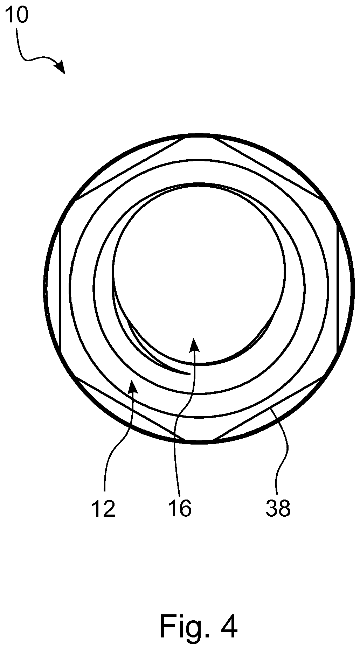

Figs. 1-5 illustrate a first embodiment of the present invention. A securing nut 10 is adapted to be screwed onto a male screw thread and comprises a bottom end face 12, a top end face 14 and a hole 16 extending from the bottom end face 12 to the top end face 14. The hole 16 comprises this screw thread passage 18 and a sliding passage 20.

The screw thread passage 18 comprises on its inner surface a screw thread portion 22 having a plurality of partial thread windings 24. The partial thread windings 24 extend along a circumferential direction about approximately 50% of the total inner circumference of the screw thread passage 18. The geometry of the screw thread portion 22 may be according to ISO or UTS threads, for example, but may also be designed according to individual needs.

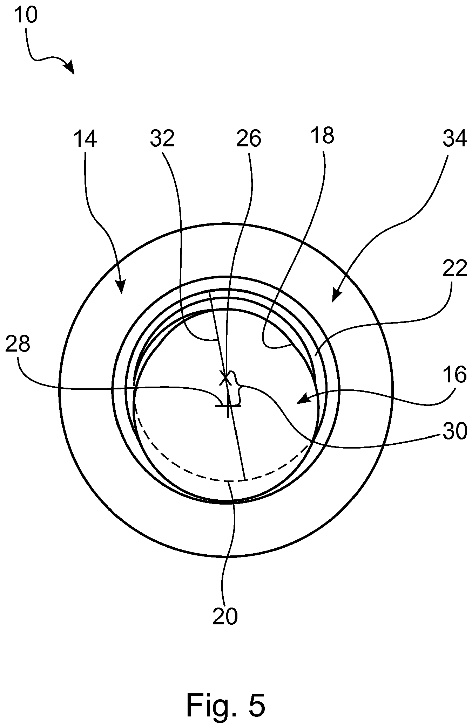

The geometrical center of the screw thread geometry is indicated by reference number 26 (see Fig. 5) and is also the center 26 of the screw thread passage 18.

The sliding passage 20 - best seen in Fig. 5 - comprises a sliding passage center 28. Between the sliding passage center 28 and the screw thread portion 22 is a distance 30 defining the eccentricity of the sliding passage 20 with regards to the screw thread passage 18.

The eccentricity 30 may be selected according to the requirements of the sanitary fitting. In the present embodiment the eccentricity is equal to or greater than the half of the difference between the major diameter of the female screw thread and the minor diameter of the female screw thread of the securing nut 10.

The major diameter is shown in Fig. 5 as reference number 32. The minor diameter cannot be indicated, since the windings 24 of the female screw thread portion 22 are not complete. In the present embodiment, the major diameter 32 equals the free diameter of the sliding passage 20 in order to provide a minimum space for a free sliding movement of a fastening rod within the sliding passage 20. However, it is not necessary to design the free diameter of the sliding passage to be the major diameter 32. Other diameters, in particular greater diameters, may be selected.

As can be seen in Figs. 1-5, the sliding passage 20 and the screw thread passage 18 are connected with each other. In particularly, both passages 18, 20 are partially merged with each other.

The first embodiment of the securing nut 10 as shown in Figs. 1-5 comprises a centering feature for defining the position of a fastening rod within the hole 16. The centering feature of the first embodiment 10 is a conically shaped centering surface portion 34. The geometrical cone of the conically shaped centering surface portion 34 is truncated. Accordingly, the centering surface portion 34 is frustroconically shaped. The geometrical center of the cone of the centering surface portion 34 coincides with the screw thread passage center 26 and is not marked with an additional reference sign for clarity reasons.

The centering feature of the securing nut 10 is shown as a flat conical surface. However, other geometrical designs of the frustoconically shaped surface portion are also within the scope of the present invention. For example, the centering feature could additionally be rim-shaped or could additionally comprise other geometrical features like bumps, indentations, grooves or the like.

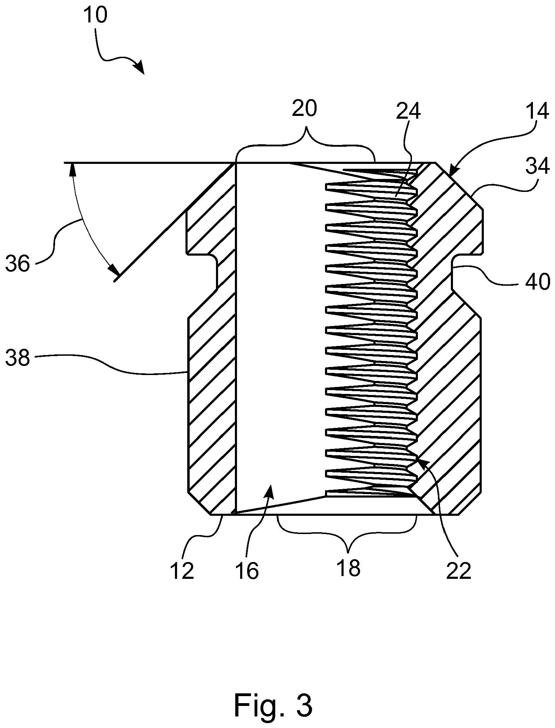

In the first embodiment of the securing nut 10 as shown in Figs. 1-5, the cone angle 36 (see Fig. 3) may have an arbitrary value. Preferably, the cone angle 36 is equal to or greater than half of the flank angle of the involved screw thread, here the female screw thread portion 22. A typical value for an appropriate angle 36 would be 90°.

The outer surface 38 of the securing nut 10 comprises a conventional hexagonal design. Of course, other designs may be used alternatively. Between the centering surface portion 34 of the top end face 14 and the outer surface 38 a guiding groove 40 is arranged. The guiding groove 40 allows for attaching the securing nut 10 to a retaining element in a guiding fashion, as will be discussed later.

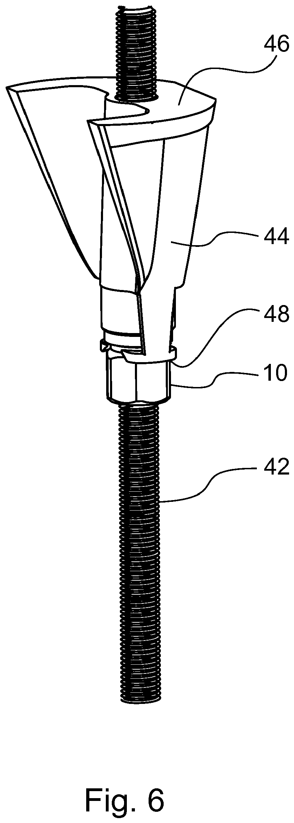

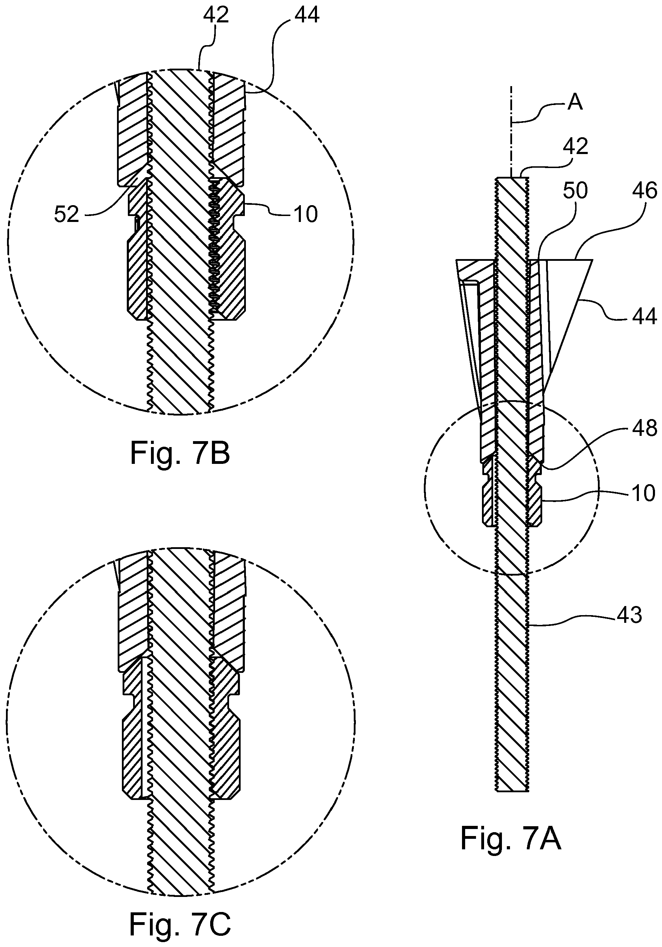

The operation of the securing nut 10 will now be described with reference to Figs. 6 and 7A-C. Fig. 6 shows in a perspective view a fastening rod 42 and a retaining element 44 as well as the securing nut 10 slid onto the fastening rod 42. The fastening rod 42 may be attached to a sanitary fitting or may be an integral part of a sanitary fitting and comprises a male screw thread 43 having a profile corresponding to that of the female screw thread portion 22 of the securing nut 10. As shown in Fig. 6, the fastening rod 42 is usually arranged in a vertical position for mounting a sanitary fitting to a mooting plate, e.g. a tabletop, a sanitary installation like a wash basin or the like.

The retaining element 44 comprises a top end face 46, a bottom end face 48, and a hole 50 extending from the top end face 46 to the bottom end face 48 of the retaining element 44. The hole may be a bore with a general cylindrical inner surface. However, other inner surface designs may apply as long as a free sliding guided movement of the fastening rod 42 within the hole 50 is possible.

The top end face 46 may be horseshoe-shaped as shown in Fig. 6, but other designs may be appropriate according to the requirements of the sanitary installation. In operation, the top end face 46 is pressed against a lower surface (e.g. a mounting plate) having a feedthrough for the fastening rod 42 and water connection conduits (not shown), if present. Accordingly, the top end face 46 has to be dimensioned and designed to be one part of a clamping arrangement, the other part being provided by the bottom end face of a sanitary fitting (not shown). The bottom end face 48 of the retaining element 44 is frustroconically shaped for cooperation with the securing nut, as will be discussed in greater detail with regards to Figs. 7A-C as follows.

Figs. 7A-7C show a sectional view of the arrangement of Fig. 6 (Fig. 7A) and two enlarged views with the securing nut 10 in a sliding position (Fig. 7B) and in a locking position (Fig. 7C). In Fig. 7A, the retaining element 44 and the securing nut 10 are in a sliding position, i.e. the securing nut 10 receives the fastening rod 42 within the sliding passage 20. Accordingly, the retaining element 44 and the securing nut 10 may slide freely along the main screw axis A of the fastening rod 42, as long as only a small force is exerted between the securing nut 10 and the retaining element 44.

This situation is shown in greater detail in the enlarged illustration of Fig. 7B. As can be seen, the female screw thread portion 22 of the screw thread passage 18 of the securing nut 10 is not engaged with the male screw thread 43 of the fastening rod 42. Instead, the inner surface of the sliding passage 20 is in close contact with the fastening rod 42 allowing for a free sliding movement of the securing nut 10, and in consequence, also of the retaining element 44, along the main screw axis, i.e. the longitudinal axis if the fastening rod 42.

When the retaining element 44 reaches the lower surface of, for example, a mounting plate, a force exerted onto the securing nut 10 (for pushing the retaining element 44 further upwards in the direction of a mounting plate) presses the securing nut 10 into the bottom end face 48 of the retaining element 44. This situation is shown in Fig. 7C.

The bottom end face 48 of the retaining element 44 comprises a centering feature. In the embodiment shown in Figs. 6 and 7A-C, the centering feature is a frustroconically shaped centering surface portion 52. As already mentioned with regards to the centering surface portion 34 of the securing nut 10, other geometrical designs like appropriate designed rims, grooves, bums, indentations, or the like may be provided additionally as centering features. It is not necessary that the bottom end face 48 of the retaining element 42 and the top end face 14 of the securing nut are a perfect geometrical match. However, it is preferred when a force exerted by the top end face 14 of the securing nut 10 is transformed into a force shifting the securing nut 10 in a direction enabling an engagement of the female screw thread portion 22 of the screw thread passage 18 and the male screw thread 43 of the fastening rod 42.

If the female screw thread portion 22 of the securing nut 10 and the male screw thread 43 are engaged, the retaining element 44 may be provide the clamping function as mentioned above, since the securing nut 10 prevents any movement of the retaining element 44 away from the sanitary fitting.

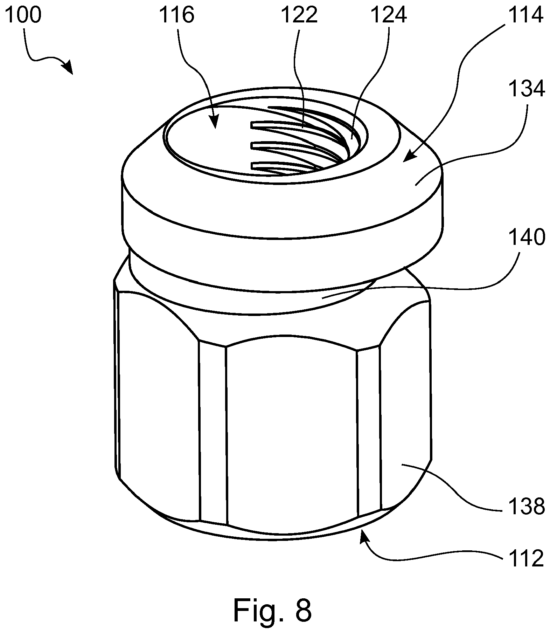

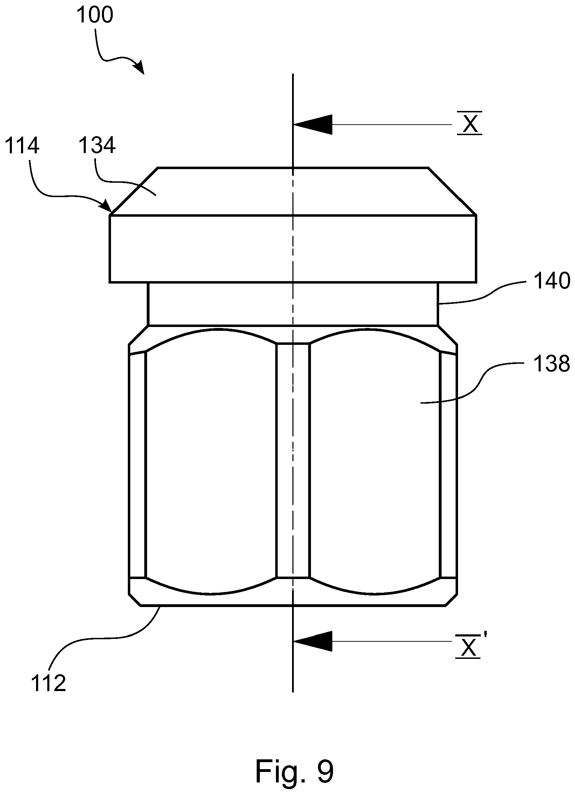

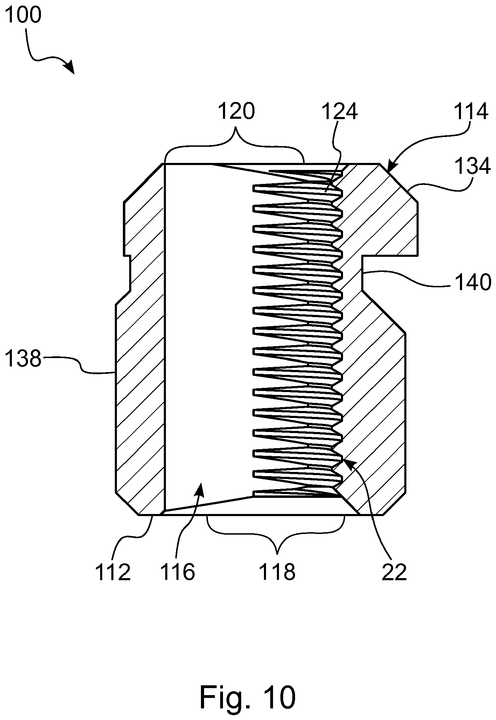

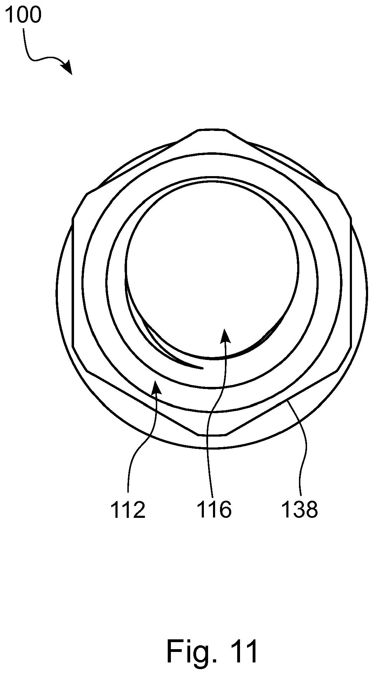

Referring to Figs. 8-12, a second embodiment of a securing nut 100 is shown. Identical or similar features are referred to by reference numbers to which 100 has been added with regards to the first embodiment as shown in Figs. 1-7. These features will not be discussed again in detail to avoid unnecessary repetitions.

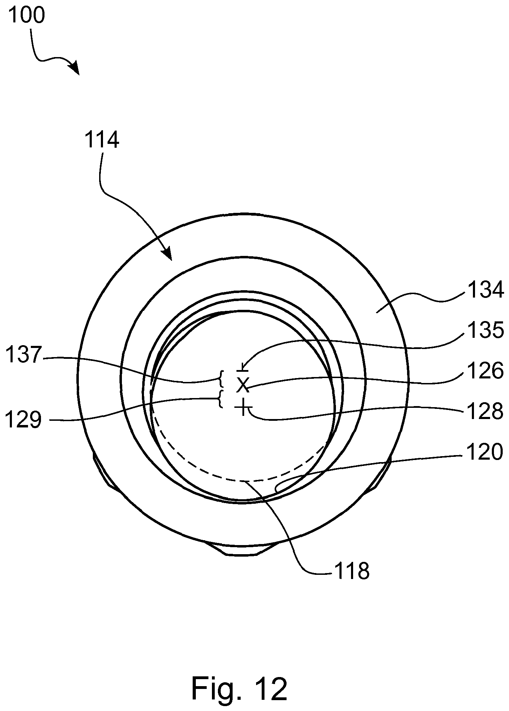

As can be seen in Figs. 8, 10, and 12, the main difference of the second embodiment 100 to the second embodiment 100 is an eccentricity of the axis of the cone of the centering surface 134 of the top end face 114 of the securing nut 100. Fig. 12 shows this feature in detail. The sliding passage center 128 defines the center of the sliding passage 120. In a distance 130 thereto - the eccentricity of the sliding passage 120 with regards to the screw thread passage 118 - the screw thread passage center 126 is arranged.

Further, as an additional feature, the center of the cone of the centering surface portion 134, which is in the second embodiment also frustroconically shaped, does not coincide with the screw thread passage center 126, but is arranged in a distance thereto.

The centering surface portion center is indicated with the reference number 135, the distance thereof to the screw thread passage center 126 with the reference number 137. The additional eccentricity of the centering surface 134 brings the screw threads of the fastening rod 42 and of the securing nut 100 closer together and substantially increases the force that can be transmitted from the securing nut 100 to the fastening rod 42.

## Claims

1. A sanitary fitting comprising a fastening device for fastening the sanitary fitting to a mounting through-hole of a sanitary installation, the fastening device comprising
a) a fastening rod (42) connected to the sanitary fitting, the fastening rod comprising at least partially a male screw thread (43) defining a main screw axis (A),
b) a retaining element (44) to be arranged on a side of the through-hole of the sanitary installation opposite to the sanitary fitting, the retaining element (44) having a top end face (46), a bottom end face (48), and a hole (50) extending from the top end face (46) to the bottom end face (48) and through which the fastening rod (42) may be passed,
c) a securing nut (10) being adapted to be screwed onto the male screw thread (43) of the fastening rod (42), the securing nut (10, 100) having a bottom end face (12), a top end face (14), and a hole (16) extending from the bottom end face (12) to the top end face (14), wherein
d) the hole (16) comprises a screw thread passage (18) and a sliding passage (20), wherein
e) the screw thread passage (18) has an inner surface with a screw thread portion (22) having at least a partial female screw thread and is adapted to engage with the male screw thread (43) of the fastening rod (42), and
f) the sliding passage (20) is adapted to receive the fastening rod (42) and is adapted to allow a sliding movement of the fastening rod (42) without the male screw thread (43) of the fastening rod (42) engaging the female screw thread (22) of the securing nut (10),
wherein
g) the screw thread passage (18) and the sliding passage (20) are connected such that the securing nut (10) and the fastening rod (42) may be displaced relative to each other perpendicularly to the main screw axis of the fastening rod between a securing position in the screw thread passage (18) and a sliding position in the sliding passage (20), wherein
h) the top end face (14) of the securing nut (10) and/or the bottom end face (48) of the retaining element (44) comprises a centering surface (34, 48) for aligning the screw thread passage (18) with the fastening rod (42), wherein
i) the centering surface comprises a frustoconically shaped surface portion (34, 48).

2. The sanitary fitting of claim 1, wherein the screw thread portion (22) of the securing nut (10, 100) extends in the screw thread passage (18) at least partially along the main screw axis (A) and partially along a circumferential direction regarding the main screw axis (A).

3. The sanitary fitting of claim 1, wherein the extension of the screw thread portion (22) along the circumferential direction is equal to or smaller than 50% of the total inner circumference of the screw thread passage (18).

4. The sanitary fitting of claim 1, wherein the centering surface comprises a flat frustoconically shaped surface portion (34, 48).

5. The sanitary fitting of claim 1, wherein the frustoconically shaped surface portion (34, 48) is convex or concave.

6. The sanitary fitting of one of the preceding claims, wherein the bottom end face (48) of the retaining element (44) corresponds with the top end face (14) of the securing nut (10) and is adapted such that a force exerted by the top end face (14) of the securing nut (10) onto the bottom end face (48) of the retaining element (44) forces the securing nut (10) to receive the fastening rod (42) in the screw thread passage (18).

7. The sanitary fitting of one of the preceding claims, wherein the shape of the bottom end face (48) of the retaining element (44) matches the shape of the top end face (14) of the securing nut (10).

8. The sanitary fitting of claim 6, wherein the axis of the cone of the frustoconically shaped surface portion (48) of the retaining element (44) coincides with the screw axis of the screw thread passage (18) of the securing nut (10) or is shifted from the screw axis in a direction away from the sliding passage (20).

9. The sanitary fitting of one of the preceding claims, wherein the retaining element (44) comprises a connection means to connect the retaining element (44) with the securing nut (10).

10. The sanitary fitting of claim 9, wherein the connection means is adapted to arrange the securing nut (10) relatively to the fastening rod (42) such that the fastening rod (42) is received in the sliding passage (20).

11. A securing nut (10) being adapted to be screwed onto a male screw thread (43) of a fastening rod (42) of a sanitary fitting according to one of the preceding claims, the securing nut (10) comprising
a) a nut body having a bottom end face (12) and a top end face (14), and
b) a hole (16) extending from the bottom end face (12) to the top end face (14), the hole (16) comprising a screw thread passage (18) and a sliding passage (20), wherein
c) the screw thread passage (18) has an inner surface with a screw portion having at least a partial female screw thread (22) and is adapted to engage with a male screw thread (43) of a fastening rod (42), wherein
d) the sliding passage (20) is adapted to receive a fastening rod (42) and to allow a sliding movement of the fastening rod (42) without the male screw thread (43) of the fastening rod (42) engaging the female screw thread (22) of the securing nut (10), and wherein
e) the top end face (14) of the securing nut (10) comprises a centering surface (34, 48) for aligning the screw thread passage (18) with the fastening rod (42), wherein the centering surface comprises a frustoconically shaped surface portion (34, 48),
**characterized in that**
f) the screw thread passage (18) and the sliding passage (20) are connected such that the securing nut (10) and a fastening rod (42) may be displaced relative to each other perpendicularly to the main screw axis of the fastening rod between the fastening rod (42) being received in a securing position in the screw thread passage (18) and the fastening rod (42) being received in a sliding position in the sliding passage (20).

12. A combination of a retaining element (44) to be arranged on a fastening rod (42) of a sanitary fitting and a securing nut (10) according to claim 11, the retaining element (44) having a top end face (46), a bottom end face (48), and a hole (50) extending from the top end face (46) to the bottom end face (48) and through which the fastening rod (42) may be passed, wherein the retaining element (44) comprises a connection means to connect the retaining element (44) with the securing nut (10).

13. The combination of claim 12, wherein the connection means is adapted to arrange the securing nut (10) relatively to the fastening rod (42) such that the fastening rod (42) is received in the sliding passage (20) of the securing nut (10).

## Patentansprüche

1. Eine Sanitärarmatur mit einer Fixierungseinrichtung für das Fixieren der Sanitärarmatur an einer Montagedurchgangsöffnung einer Sanitärinstallation, wobei die Fixierungseinrichtung umfasst
a) eine mit der Sanitärarmatur verbundene Fixierungsstange (42), wobei die Fixierungsstange zumindest teilweise ein Außengewinde (43) umfasst, das eine Hauptschraubenachse (A) definiert,
b) ein Halteelement (44), das an einer der Sanitärarmatur gegenüberliegenden Seite der Durchgangsöffnung der Sanitärinstallation anzuordnen ist, wobei das Halteelement (44) eine obere Stirnfläche (46), eine untere Stirnfläche (48) und eine Öffnung (50) aufweist, wobei die Öffnung (50) sich von der oberen Stirnfläche (46) zu der unteren Stirnfläche (48) erstreckt und die Fixierungsstange (42) durch die Öffnung (50) durchgeführt werden kann,
c) eine Sicherungsmutter (10), die dazu ausgelegt ist, auf das Außengewinde (43) der Fixierungsstange (42) geschraubt zu werden, wobei die Sicherungsmutter (10 , 100) eine untere Stirnfläche (12), eine obere Stirnfläche (14) und eine Öffnung (16) aufweist, wobei die Öffnung (16) sich von der unteren Stirnfläche (12) zu der oberen Stirnfläche (14) erstreckt, wobei
d) die Öffnung (16) einen Schraubengewindedurchgang (18) und einen Schiebedurchgang (20) umfasst, wobei
e) der Schraubengewindedurchgang (18) eine innere Oberfläche mit einem Schraubengewindeabschnitt (22) aufweist, wobei der Schraubengewindeabschnitt (22) zumindest ein Teilinnengewinde aufweist, und dazu ausgelegt ist, in das Außengewinde (43) der Fixierungsstange (42) einzugreifen, und
f) der Schiebedurchgang (20) dazu ausgelegt ist, die Fixierungsstange (42) aufzunehmen und eine Schiebebewegung der Fixierungsstange (42) zuzulassen, ohne dass das Außengewinde (43) der Fixierungsstange (42) in das Innengewinde (22) der Sicherungsmutter (10) eingreift,
wobei
g) der Schraubengewindedurchgang (18) und der Schiebedurchgang (20) derart miteinander verbunden sind, dass die Sicherungsmutter (10) und die Fixierungsstange (42) relativ zueinander, senkrecht zu der Hauptschraubenachse der Fixierungsstange, zwischen einer Sicherungsposition in dem Schraubengewindedurchgang (18) und einer Schiebeposition in dem Schiebedurchgang (20) bewegbar sind, wobei
h) die obere Stirnfläche (14) der Sicherungsmutter (10) und/oder der unteren Stirnfläche (48) des Halteelements (44) eine Zentrierungsoberfläche (34, 48) zur Ausrichtung des Schraubengewindedurchgangs (18) an der Fixierungsstange (42) umfasst, wobei
i) die Zentrierungsoberfläche einen kegelstumpfförmigen Oberflächenabschnitt (34, 48) umfasst.

2. Die Sanitärarmatur nach Anspruch 1, wobei sich der Schraubengewindeabschnitt (22) der Sicherungsmutter (10, 100) in dem Schraubengewindedurchgang (18) zumindest teilweise entlang der Hauptschraubenachse (A) und teilweise entlang einer Umfangsrichtung in Bezug auf die Hauptschraubenachse (A) erstreckt.

3. Die Sanitärarmatur nach Anspruch 1, wobei die Erstreckung des Schraubengewindeabschnitts (22) entlang der Umfangsrichtung gleich groß oder größer als 50% des gesamten inneren Umfangs des Schraubengewindedurchgangs (18) ist.

4. Die Sanitärarmatur nach Anspruch 1, wobei die Zentrierungsoberfläche einen flachen kegelstumpfförmigen Oberflächenabschnitt (34, 48) umfasst.

5. Die Sanitärarmatur nach Anspruch 1, wobei der kegelstumpfförmige Oberflächenabschnitt (34, 48) konvex oder konkav ist.

6. Die Sanitärarmatur nach einem der vorhergehenden Ansprüche, wobei die untere Stirnfläche (48) des Halteelements (44) mit der oberen Stirnfläche (14) der Sicherungsmutter (10) übereinstimmt und derart ausgelegt ist, dass eine von der oberen Stirnfläche (14) der Sicherungsmutter (10) auf die untere Stirnfläche (48) des Halteelements (44) ausgeübte Kraft bewirkt, dass die Sicherungsmutter (10) die Fixierungsstange (42) in dem Schraubengewindedurchgang (18) aufnimmt.

7. Die Sanitärarmatur nach einem der vorhergehenden Ansprüche, wobei die Form der unteren Stirnfläche (48) des Halteelements (44) mit der Form der oberen Stirnfläche (14) der Sicherungsmutter (10) abgestimmt ist.

8. Die Sanitärarmatur nach Anspruch 6, wobei die Kegelachse des kegelstumpfförmigen Oberflächenabschnitts (48) des Halteelements (44) mit der Schraubachse des Schraubengewindedurchgangs (18) der Sicherungsmutter (10) zusammenfällt oder von der Schraubachse in eine von dem Schiebedurchgang (20) wegweisende Richtung versetzt ist.

9. Die Sanitärarmatur nach einem der vorhergehenden Ansprüche, wobei das Halteelement (44) ein Verbindungsmittel zum Verbinden des Halteelements (44) mit der Sicherungsmutter (10) umfasst.

10. Die Sanitärarmatur nach Anspruch 9, wobei das Verbindungsmittel dazu ausgelegt ist, die Sicherungsmutter (10) relativ zu der Fixierungsstange (42) derart anzuordnen, dass die Fixierungsstange (42) in dem Schiebedurchgang (20) aufgenommen wird.

11. Eine Sicherungsmutter (10), die dazu ausgelegt ist, auf das Außengewinde (43) einer Fixierungsstange (42) einer Sanitärarmatur gemäß einem der vorhergehenden Ansprüche geschraubt zu werden, wobei die Sicherungsmutter (10) umfasst
a) einen Muttergrundkörper, der eine untere Stirnfläche (12) und eine obere Stirnfläche (14) aufweist, und
b) eine Öffnung (16), die sich von der unteren Stirnfläche (12) zur oberen Stirnfläche (14) erstreckt, wobei die Öffnung (16) einen Schraubengewindedurchgang (18) und einen Schiebedurchgang (20) umfasst, wobei
c) der Schraubengewindedurchgang (18) eine innere Oberfläche mit einem Schraubabschnitt aufweist, wobei der Schraubabschnitt zumindest ein Teilinnengewinde (22) aufweist, und dazu ausgelegt ist, in ein Außengewinde (43) der Fixierungsstange (42) einzugreifen, wobei
d) der Schiebedurchgang (20) dazu ausgelegt ist, die Fixierungsstange (42) aufzunehmen und eine Schiebebewegung der Fixierungsstange (42) zuzulassen, ohne dass das Außengewinde (43) der Fixierungsstange (42) in das Innengewinde (22) der Sicherungsmutter (10) eingreift, und wobei
e) die obere Stirnfläche (14) der Sicherungsmutter (10) eine Zentrierungsoberfläche (34, 48) zur Ausrichtung des Schraubengewindedurchgangs (18) an der Fixierungsstange (42) umfasst, wobei die Zentrierungsoberfläche einen kegelstumpfförmigen Oberflächenabschnitt (34, 48) umfasst,
**dadurch gekennzeichnet, dass**
f) der Schraubengewindedurchgang (18) und der Schiebedurchgang (20) derart miteinander verbunden sind, dass die Sicherungsmutter (10) und eine Fixierungsstange (42) relativ zueinander, senkrecht zu der Hauptschraubenachse der Fixierungsstange, zwischen einer Sicherungsposition, in der die Fixierungsstange (42) in dem Schraubengewindedurchgang (18) aufgenommen ist, und einer Schiebeposition, in der die Fixierungsstange (42) in dem Schiebedurchgang (20) aufgenommen ist, bewegbar sind.

12. Eine Kombination aus einem Halteelement (44), das auf einer Fixierungsstange (42) einer Sanitärarmatur anzuordnen ist und einer Sicherungsmutter (10) gemäß Anspruch 11, wobei das Halteelement (44) eine obere Stirnfläche (46), eine untere Stirnfläche (48) und eine Öffnung (50) umfasst, wobei die Öffnung (50) sich von der oberen Stirnfläche (46) zu der unteren Stirnfläche (48) erstreckt und die Fixierungsstange (42) durch die Öffnung (50) durchgeführt werden kann, wobei das Halteelement (44) ein Verbindungsmittel zum Verbinden des Halteelements (44) mit der Sicherungsmutter (10) umfasst.

13. Die Kombination nach Anspruch 12, wobei das Verbindungsmittel dazu ausgelegt ist, die Sicherungsmutter (10) relativ zu der Fixierungsstange (42) derart anzuordnen, dass die Fixierungsstange (42) in dem Schiebedurchgang (20) der Sicherungsmutter (10) aufgenommen ist.

## Revendications

1. Robinetterie sanitaire comprenant un dispositif de fixation destiné à fixer la robinetterie sanitaire sur un trou traversant de montage d'une installation sanitaire, le dispositif de fixation comprenant
a) une tige de fixation (42) reliée à la robinetterie sanitaire, la tige de fixation comprenant au moins en partie un filetage mâle (43) définissant un axe de filetage principal (A),
b) un élément de retenue (44) à agencer sur un côté du trou traversant de l'installation sanitaire opposé à la robinetterie sanitaire, l'élément de retenue (44) ayant une face d'extrémité supérieure (46), une face d'extrémité inférieure (48), et un trou (50) s'étendant depuis la face d'extrémité supérieure (46) jusqu'à la face d'extrémité inférieure (48) et à travers lequel la tige de fixation (42) peut être passée,
c) un écrou de blocage (10) étant conçu pour être vissé sur le filetage mâle (43) de la tige de fixation (42), l'écrou de blocage (10, 100) ayant une face d'extrémité inférieure (12), une face d'extrémité supérieure (14), et un trou (16) s'étendant depuis la face d'extrémité inférieure (12) jusqu'à la face d'extrémité supérieure (14), où
d) le trou (16) comprend un passage de filetage (18) et un passage de coulissement (20), où
e) le passage de filetage (18) présente une surface intérieure avec une partie de filetage (22) ayant au moins un filetage femelle partiel et est conçu pour s'engager avec le filetage mâle (43) de la tige de fixation (42), et
f) le passage de coulissement (20) est conçu pour recevoir la tige de fixation (42) et est conçu pour permettre un mouvement de coulissement de la tige de fixation (42) sans que le filetage mâle (43) de la tige de fixation (42) ne s'engage avec le filetage femelle (22) de l'écrou de blocage (10),
où
g) le passage de filetage (18) et le passage de coulissement (20) sont reliés de telle sorte que l'écrou de blocage (10) et la tige de fixation (42) peuvent être déplacés l'un par rapport à l'autre perpendiculairement à l'axe de filetage principal de la tige de fixation entre une position de blocage dans le passage de filetage (18) et une position de coulissement dans le passage de coulissement (20), où
h) la face d'extrémité supérieure (14) de l'écrou de blocage (10) et/ou la face d'extrémité inférieure (48) de l'élément de retenue (44) comprennent une surface de centrage (34, 48) destinée à aligner le passage de filetage (18) avec la tige de fixation (42), où
i) la surface de centrage comprend une partie de surface de forme tronconique (34, 48).

2. Robinetterie sanitaire selon la revendication 1, dans laquelle la partie de filetage (22) de l'écrou de blocage (10, 100) s'étend dans le passage de filetage (18) au moins en partie le long de l'axe de filetage principal (A) et en partie le long d'une direction circonférentielle par rapport à l'axe de filetage principal (A).

3. Robinetterie sanitaire selon la revendication 1, dans laquelle l'extension de la partie de filetage (22) le long de la direction circonférentielle est inférieure ou égale à 50 % de la circonférence intérieure totale du passage de filetage (18).

4. Robinetterie sanitaire selon la revendication 1, dans laquelle la surface de centrage comprend une partie de surface de forme tronconique plane (34, 48).

5. Robinetterie sanitaire selon la revendication 1, dans laquelle la partie de surface de forme tronconique (34, 48) est convexe ou concave.

6. Robinetterie sanitaire selon l'une des revendications précédentes, dans laquelle la face d'extrémité inférieure (48) de l'élément de retenue (44) correspond à la face d'extrémité supérieure (14) de l'écrou de blocage (10) et est conçue de telle sorte qu'une force exercée par la face d'extrémité supérieure (14) de l'écrou de blocage (10) sur la face d'extrémité inférieure (48) de l'élément de retenue (44) force l'écrou de blocage (10) à recevoir la tige de fixation (42) dans le passage de filetage (18).

7. Robinetterie sanitaire selon l'une des revendications précédentes, dans laquelle la forme de la face d'extrémité inférieure (48) de l'élément de retenue (44) correspond à la forme de la face d'extrémité supérieure (14) de l'écrou de blocage (10).

8. Robinetterie sanitaire selon la revendication 6, dans laquelle l'axe du cône de la partie de surface de forme tronconique (48) de l'élément de retenue (44) coïncide avec l'axe de filetage du passage de filetage (18) de l'écrou de blocage (10) ou est décalé de l'axe de filetage dans une direction s'écartant du passage de coulissement (20).

9. Robinetterie sanitaire selon l'une des revendications précédentes, dans laquelle l'élément de retenue (44) comprend un moyen de liaison pour relier l'élément de retenue (44) à l'écrou de blocage (10).

10. Robinetterie sanitaire selon la revendication 9, dans laquelle le moyen de liaison est conçu pour agencer l'écrou de blocage (10) par rapport à la tige de fixation (42) de telle sorte que la tige de fixation (42) est reçue dans le passage de coulissement (20).

11. Ecrou de blocage (10) étant conçu pour être vissé sur un filetage mâle (43) d'une tige de fixation (42) d'une robinetterie sanitaire selon l'une des revendications précédentes, l'écrou de blocage (10) comprenant
a) un corps d'écrou ayant une face d'extrémité inférieure (12) et une face d'extrémité supérieure (14), et
b) un trou (16) s'étendant depuis la face d'extrémité inférieure (12) jusqu'à la face d'extrémité supérieure (14), le trou (16) comprenant un passage de filetage (18) et un passage de coulissement (20), où
c) le passage de filetage (18) présente une surface intérieure avec une partie de filetage ayant au moins un filetage femelle partiel (22) et est conçu pour s'engager avec un filetage mâle (43) d'une tige de fixation (42), où
d) le passage de coulissement (20) est conçu pour recevoir une tige de fixation (42) et pour permettre un mouvement de coulissement de la tige de fixation (42) sans que le filetage mâle (43) de la tige de fixation (42) ne s'engage avec le filetage femelle (22) de l'écrou de blocage (10), et où
e) la face d'extrémité supérieure (14) de l'écrou de blocage (10) comprend une surface de centrage (34, 48) destinée à aligner le passage de filetage (18) avec la tige de fixation (42), où la surface de centrage comprend une partie de surface de forme tronconique (34, 48),
**caractérisé en ce que**
f) le passage de filetage (18) et le passage de coulissement (20) sont reliés de telle sorte que l'écrou de blocage (10) et une tige de fixation (42) peuvent être déplacés l'un par rapport à l'autre perpendiculairement à l'axe de filetage principal de la tige de fixation entre la tige de fixation (42) étant reçue dans une position de blocage dans le passage de filetage (18) et la tige de fixation (42) étant reçue dans une position de coulissement dans le passage de coulissement (20).

12. Combinaison d'un élément de retenue (44) à agencer sur une tige de fixation (42) d'une robinetterie sanitaire et d'un écrou de blocage (10) selon la revendication 11, l'élément de retenue (44) ayant une face d'extrémité supérieure (46), une face d'extrémité inférieure (48), et un trou (50) s'étendant depuis la face d'extrémité supérieure (46) jusqu'à la face d'extrémité inférieure (48) et à travers lequel la tige de fixation (42) peut être passée, où l'élément de retenue (44) comprend un moyen de liaison pour relier l'élément de retenue (44) à l'écrou de blocage (10).

13. Combinaison selon la revendication 12, dans laquelle le moyen de liaison est conçu pour agencer l'écrou de blocage (10) par rapport à la tige de fixation (42) de telle sorte que la tige de fixation (42) est reçue dans le passage de coulissement (20) de l'écrou de blocage (10).
